# EUROPÄISCHE PATENTSCHRIFT

(11) **EP 0 488 485 B1**
(45) Veröffentlichungstag und Bekanntmachung des Hinweises auf die Patenterteilung: **05.07.1995**
(21) Anmeldenummer: 91250309.1
(22) Anmeldetag: 11.11.1991
(51) Int. Cl.: B29C 45/14

(54) **Verfahren und Vorrichtung zur Herstellung einer dekorierten Chip-Karte**
Method and apparatus for manufacturing a decorated chip-card
Procédé et dispositif pour fabriquer une carte, à circuit intégré, décorée

(30) Priorität: 27.11.1990 DE 4038126
(43) Veröffentlichungstag der Anmeldung: 03.06.1992
(73) Patentinhaber: MANNESMANN Aktiengesellschaft, 40027 Düsseldorf (DE)
(72) Erfinder: Gläser, Arnaldo Arthur, Dipl.-Ing., W-8561 Neunkirchen (DE); Kaufhold, Hans-Joachim, Dipl.-Ing., W-8501 Feucht 2 (DE)
(74) Vertreter: Meissner, Peter E., Dipl.-Ing.

(56) Entgegenhaltungen:
- EP-A- 0 231 670
- EP-A- 0 340 099
- EP-A- 0 340 100
- EP-A- 0 350 179
- EP-A- 0 412 493
- FR-A- 2 520 541
- PATENT ABSTRACTS OF JAPAN vol. 12, no. 55 (M-669)(2902) 19. Februar 1988 & JP-A-62 201 216 (NISSHA PRINTING CO LTD)

## Beschreibung

Die Erfindung betrifft ein Verfahren Zur Herstellung einer dekorierten Chip-Karte und ein Werkzeug einer Spritzgieißmaschine zur Herstellung einer solchen Chip-Karte.

Bei der Chip-Karte handelt es sich um eine Kunststoffkarte im Scheckkartenformat, in die ein metallischer Chip eingebracht ist. Dieser Chip kann dabei beispielsweise die Funktion eines Datenspeichers für Schutz- oder Identitätscode, für Bank- oder Telefondaten aufweisen. Im Gegensatz zu den Magnetstreifen weisen die Chips eine höhere Sicherheit gegen Zerstörung und Veränderung von Daten auf.

Die Karten werden von Herausgebern als Werbeträger benutzt. Dabei wird ein immer höherer Anspruch an das Design und die Oberflächenbeschaffenheit der Karten gestellt.

Aus der EP-A- 035 01 79, der EP-A- 01 40 100 und der FR-A-25 20 541 sind jeweils Verfahren zur Herstellung von Chip-Karten bekannt, bei denen in die geöffnete Form ein Film eingeführt und ein Chip positioniert wird und anschließend erfolgt ein Einspritzen des Trägermaterials. Nach dem Erhärten dieses Materials kann die fertige Chip-Karte entnommen werden.

Aus der DE-A-31 30 135 ist ein Verfahren zur Herstellung einer tragbaren Karte zur Informationsverarbeitung mit einem Halbleiterchip bekannt, bei der das Vergießen der Tragerkarte und der Einbau des Chips in Zwei Arbeitsschritten durchgeführt wird.

Ein Dekorieren der Chip-Karte wird in der genannten Schrift nicht beschrieben.

Üblicherweise wird die mit einem Chip versehene Karte in einer gesonderten Station mit einem Dekor versehen. Nachteilig wirkt sich hier das Erfordernis der aufwendigen räumlichen Anpassung von fertigen Chip-Trägern und Dekor aus. In aufwendiger und kostenintensiver Weise werden die Chip-Karten komplettiert.

Aufgabe der Erfindung ist es, ein Verfahren und eine Vorrichtung zur Herstellung von Chip-Karten Zu schaffen, mit konstruktiv einfachen Mitteln fertig dekorierte Chip-Karten schnell und sicher Zu produzieren.

Diese Aufgabe wird gelöst durch die Merkmale der Ansprüche 1 und 5.

In einer Produktionszelte wird die Chip-Karte als Fertigprodukt hergestellt. Bei geöffneter Kavität werden auf Filmen angebrachte Dekore mittels Filmtransporteinrichtungen zugeführt. In der geöffneten Kavität ist der Film sicher positionierbar. Beim Schließen der Kavität wird der Film in seiner Position gehalten und in der geschlossenen Kavität durch Klemmung fixiert.

In die geschlossene Kavität wird die Kunststoffmasse gepreßt. Sie verbindet sich mit dem in seiner Lage festgehaltenen Dekor und haftet gleichzeitig am Chip.

Je nach Anforderung des äußeren Erscheinungsbildes der Chip-Karte können ein oder zwei mit Dekor versehene Filme eingesetzt werden. Wird nur ein Film benutzt, so weist dieser vorzugsweise ein zweiseitiges Dekor auf. Beim Einsatz nur eines Filmes bietet es sich an, diesen auf der der Chip-Zuführung gegenüberliegenden Seite der Kavität anzuordnen.

Ist auf der Chipseite der Karte ein Dekor vorgesehen, so erhält der chipseitig angeordnete Film vor dem Zuführen in die Kavität ein Fenster, durch das der Chip durchführbar ist.

Die auf einer Trägerfolie angeordneten Chips werden ausgestanzt und mittels einer mechanischen Einrichtung der Kavität zugeführt. Der Chip wird beim Zuführen in die leere Kavität und beim Halten während des Spritzvorganges exakt in seiner Lage senkrecht zur Breitseite der Kavität gehalten.

Beim späteren Einsatz der Chip-Karte ist es von Vorteil, wenn der Chip die Oberkante der Karte überragt. Während der Verbindung des Chips und der eingespritzten Kunststoffmasse beim Herstellprozeß kann der Chip in seiner Eindringtiefe in die Kavität von Anfang an fixiert oder mit der eindringenden Kunststoffmasse von einer gesamt eingetauchten Lage auf das Endmaß zur Oberfläche Zurückgedrückt werden. Vorzugsweise überragt der Chip in einer Länge von 10 bis 20 % seiner Gesamthöhe aus der fertigen Karte heraus.

Nach Beendigung des Einspritzvorganges wird der Anguß gestanzt, die Kavität wird geöffnet und die Chip-Karte wird entnommen. Ein neuer Zyklus zur Herstellung einer dekorierten Chip-Karte kann beginnen.

Das Werkzeug der Spritzgießmaschine zur Herstellung dekorierter Chip-Karten weist einen Ring auf, der lösbar an der Spritzgießmaschine befestigt ist. Dieser Ring bildet die Seitenwandung der Kavität, während Boden und Deckel aus Gehäuseteilen des Spritzgießwerkzeuges bestehen. Während des Gießvorganges wird der Ring dichtend gegen den Boden und den Deckel gepreßt. Beim Schließen und öffnen der Kavität werden die Gehäuseteile senkrecht zur Mittenachse zum und vom Ring bewegt. Der Ring und die übrigen, die Kavität bildenden Gehäuseteile, können dabei vertikal oder horizontal angeordnet sein.

Vor dem Einbringen der Kunststoffmasse in die Kavität werden die Gehäuseteile auf den Ring im Bereich der Dichtfläche gepreßt. Eine Leckage der Kunststoffmasse im Randbereich der Gießform wird hierdurch vermieden. Um ein Verrutschen des Filmes zu verhindern ist vorzugsweise eine Klemmkante an den Umlenkseiten des Gehäuses in Filmförderrichtung vorgesehen.

Nach dem Erstarren der Kunststoffmasse des Kartengrundträgers wird der Anguß gestanzt. Anschließend wird die Form durch Wegbewegen des Deckels und/oder des Bodens vom Ring geöffnet. Dabei löst sich die Chip-Karte von dem Dekorträgerfilm. In der Vorrichtung zum Halten des Chips wird der Unterdruck nachgelassen. Der Abstand zwischen einem Gehäuseteil und dem Ring wird vorzugsweise chipseitig größer gemacht als die Höhe der Chip-Karte einschließlich des herausragenden Ende des Chips. Anschließend wird die Chip-Karte aus der Form herausbefördert.

Es können Monozellen zum Einsatz kommen, die horizontal oder vertikal angeordnet sind. Der Vorteil einer solchen Monozelle ist die Möglichkeit des Einsatzes von Standardspritzgießvorrichtungen.

Um die Taktzeit zu verkürzen, bietet sich der Einsatz eines Drehtellers an. Ein solcher Drehteller weist dabei vorzugsweise drei Arbeitspositionen auf, und zwar Spritzen. Entnehmen und von außen Einlegen der Chips. In weiterer vorteilhafter Weise können die Arbeitspositionen Entnehmen und Einlegen zusammengefaßt werden. Zur weiteren Erhöhung der Taktzeit können mehrere Sätze von Arbeitspositionen auf dem Drehteller angeordnet sein.

Der Drehteller kann horizontal oder vertikal angeordnet werden. Der Vorteil einer vertikalen Anordnung des Drehtellers besteht darin, daß eine Anspritzung in der Trennebene entfallen kann, ohne daß eine Umlenkung des Heißkanals erforderlich ist. Darüber hinaus fixiert sich der Drehteller durch Schwerkraft selbst.

Die Erfindung ist in den beiliegenden Zeichnungen dargestellt. Es zeigen:
- Fig. 1: einen Schnitt durch das Werkzeug im Bereich des Ringes,
- Fig. 2: einen Schnitt durch einen Drehteller und
- Fig. 3: die Draufsicht auf einen Drehteller.

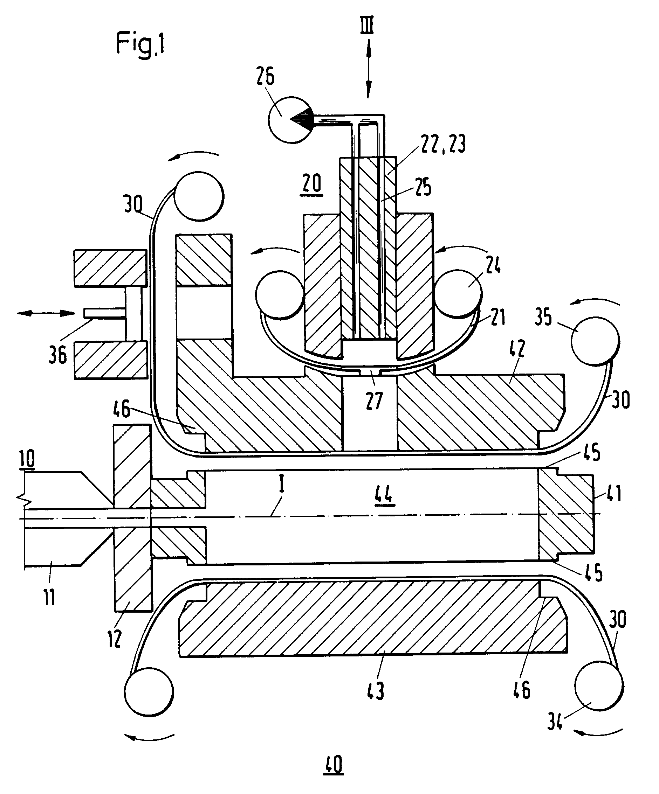

Die Figur 1 weist einen Spritzkopf 11 einer nicht weiter dargestellten Spritzgießmaschine 10 auf. Zwischen dem Spritzkopf 11 und der Kavität 44 des Werkzeugs 40 ist ein Heißkanal 12 angeordnet. Der Heißkanal 12 wird gegen einen Ring 41 gedrückt, wobei in der Trennebene I des Werkzeugs 40 eine Öffnung im Ring 41 vorgesehen ist, durch den das Kunststoffmaterial von der Spritzgießmaschine 10 durch den Heißkanal 12 in die Kavität 44 gelangen kann. Gegen den Ring 41 sind die Gehäuseteile 42 und 43 andrückbar bzw. von ihm wegbewegbar. Der Ring 41 weist dabei umlaufende Dichtflächen 45 auf, die mit entsprechenden Dichtflächen 46 der Gehäuseseitenteile 43 und 43 korrespondieren. An dem Gehäuseseitenteil 42 ist eine Chipzuführeinrichtung 20 vorgesehen. Die Chipzuführeinrichtung 20 weist dabei Antriebe 24 auf, mit denen eine Trägerfolie 21 durch die Stempelachse III führbar ist. In der Chipzuführeinrichtung 20 ist in axialer Richtung ein Haltestempel 23 bewegbar. Der Haltestempel 23 weist Kanäle 25 auf, die mit einer Pneumatikpumpe 26 in Verbindung stehen. Der Haltestempel 23 kann als Stanzer 22 ausgebildet sein.

An dem Gehäuseseitenteil 42 ist eine Filmtransporteinrichtung 35 zum Bewegen eines Dekorfilms 30 vorgesehen. Der Dekorfilm 30 weist, in der vorliegenden Skizze nicht dargestellt, eine Kunststoffschicht, eine Isolierschicht und eine Farbschicht auf.

Am chipseitig angeordneten Gehäuseseitenteii 42 ist weiterhin ein Filmstanzer 36 vorgesehen, mit dem Fenster in den Dekorfilm 30 gestanzt werden, die eine den Umrissen des Chips 27 entsprechenden Größe aufweisen.

An dem bodenseitig angeordneten Gehäuseteil 43 ist eine Filmtransporteinrichtung 34 vorgesehen.

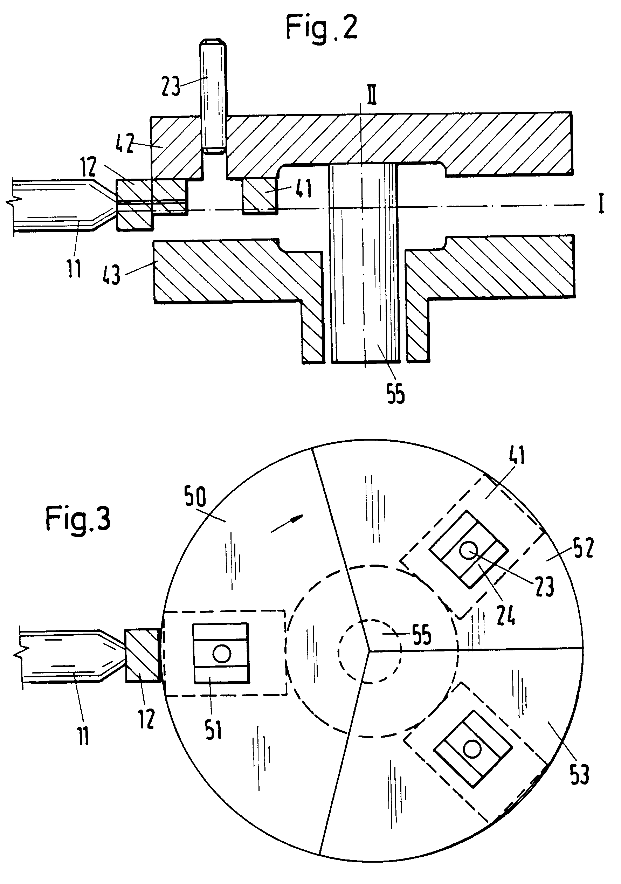

Die Figuren 2 und 3 zeigen einen Drehteller 50 mit einem Königszapfen 55. Der Drehteller weist gegeneinander bewegliche Gehäuseteile 42 und 43 auf, zwischen denen ein Ring 41 einpreßbar ist. Am Ring 41 ist der Heißkanal 12 angeordnet, der mit dem Spritzkopf 11 in Verbindung steht.

Am Gehäuseseitenteil 42 ist ein Haltestempel 23 angeordnet.

Der um die Drehachse II drehbare Drehteller 50 weist die Arbeitsposition Spritzen 51, Entnehmen 52 und Einlegen 53 auf. Die weiteren Variationsmöglichkeiten, und zwar die Arbeitsposition Einlegen/Entnehmen sowie mehrere Sätze von Arbeitspositionen am Drehteller anzuordnen, sind nicht gesondert dargestellt worden.

### Positionsliste

- 10: Spritzgießmaschine
- 11: Spritzkopf
- 12: Heißkanal
- 20: Chip-Zuführeinrichtung
- 21: Trägerfolie
- 22: Stanzer
- 23: Haltestempel
- 24: Antrieb
- 25: Kanäle
- 26: Pneumatikpumpe
- 27: Chip
- 30: Dekorfilm
- 34: Filmtransporteinrichtung bodenseitig
- 35: Filmtransporteinrichtung chipseitig
- 36: Filmstanzer
- 40: Werkzeug
- 41: Ring
- 42: Gehäuseseitenteil chipseitig
- 43: Gehäuseseitenteil bodenseitig
- 44: Kavität
- 45: Dichtfläche Ring
- 46: Dichtfläche Gehäuse
- 50: Drehteller
- 51: Arbeitsposition Spritzen
- 52: Arbeitsposition Entnehmen
- 53: Arbeitsposition Einlegen
- 54: Arbeitsposition Entnehmen/Einlegen
- 55: Königszapfen
- I: Zentralachse
- II: Drehachse
- III: Stempelachse

## Patentansprüche

1. Verfahren zur Herstellung einer dekorierten Chip-Karte in einer Spritzgießmaschine, bei dem
a) in die geöffnete Kavität der Spritzgießmaschine mindestens ein Film, der an seiner der Kavität zugewandten Breitseite mit ein- oder zweiseitigem Dekor beschichtet ist, eingeführt und positioniert, wobei bei einem an der Chip-Zuführungsseite der Kavität angeordneten Film vor dem Einführen des Films in die Kavität zur Plazierung des Chips ein Fenster gestanzt wird,
b) danach die Kavität geschlossen und der Film bzw. die Filme klemmend fixiert wird bzw. werden,
c) nach Schließen der Kavität dieser ein aus einer Folie gestanzter Chip kraftschlüssig gehaltert zugeführt wird.
d) anschließend eine Trägermasse für die Chip-Karte in die Kavität eingespritzt wird,
e) nach Beendigung des Einspritzvorganges der Anguß gestanzt, die Kavität geöffnet und die Chip-Karte entnommen wird.

2. Verfahren nach Anspruch 1
dadurch gekennzeichnet,
daß der kraftschlüssig gehalterte Chip vollständig in die Kavität eingeführt wird und nach Einspritzen der Trägermasse von dieser so weit zurückbewegt wird, bis 10 bis 20 % seiner Längserstreckung die Chipoberfläche überragen.

3. Verfahren nach den Ansprüchen 1 bis 2,
dadurch gekennzeichnet,
daß das Zuführen des Chips beendet wird, wenn der Chip zwischen 80 bis 90 % in die Kavität hineinragt.

4. Verfahren nach einem der Ansprüche 1 bis 3,
dadurch gekennzeichnet,
daß das Positionieren der Filme sowie das Einspritzen der Trägermasse der Chip-Karte gleichzeitig aber an verschiedenen Werkzeugpositionen durchgeführt wird.

5. Spritzgießmaschine mit einem Werkzeug, in dessen Kavität durch eine Spritzvorrichtung Trägermassen zur Herstellung einer dekorierten Chip-Karte nach Anspruch 1 einspritzbar sind, wobei
das Werkzeug deckelseitig ein Gehäuseseitenteil (42) und bodenseitig ein Gehäuseseitenteil (43) aufweist,
die Gehäuseteile (42, 43) senkrecht zur Zentralebene (1) der Kavität der Spritzgießmaschine bewegbar sind,
an mindestens einer der Gehäuseseitenteile (42, 43) Filmtransporteinrichtungen (34, 35) anordnenbar sind,
das Gehäuseseitenteil (42) eine Chipzuführung (20) aufweist, die Elemente zum kraftschlüssigen Halten des Chips besitzt, und
zwischen den Gehäuseseitenteilen (42, 43) ein feststehender, die Kavität umschließender Ring (41) angeordnet ist.

6. Vorrichtung nach Anspruch 5,
dadurch gekennzeichnet,
daß die Filmtransporteinrichtungen (34, 35) auf der von der Kavität wegweisenden Seite der Gehäuseseitenteile (42, 43) angeordnet sind.

7. Vorrichtung nach Anspruch 5,
dadurch gekennzeichnet,
daß an den Gehäuseteilenteilen (42, 43) und am Ring (41) sich entsprechende Dichtflächen (45, 46) vorgesehen sind.

8. Vorrichtung nach den Ansprüchen 6 oder 7,
dadurch gekennzeichnet,
daß die Dichtflächen (45, 46) derart ausgestaltet sind, daß Dekorfilme an der zur Kavität weisenden Seite der Gehäuseseitenteile (42, 43) führbar und bei geschlossener Form an mindestens zwei Dichtflächen klemmbar sind.

9. Vorrichtung nach Anspruch 6,
dadurch gekennzeichnet,
daß zusätzlich zur deckelseitig angeordneten Filmtransporteinrichtung (35) an dem Gehäuseseitenteil (42) ein Filmstanzer (36) zur Herstellung eines Chipfensters vorgesehen ist.

10. Vorrichtung nach Anspruch 5,
dadurch gekennzeichnet,
daß die Chipzuführung (20) ein lateral beweglicher Haltestempel (23) ist.

11. Vorrichtung nach Anspruch 10,
dadurch gekennzeichnet,
daß im Haltestempel (23) Kanäle (25) zum Führen von pneumatischen Medien vorgesehen sind.

12. Vorrichtung nach den Ansprüchen 10 oder 11,
dadurch gekennzeichnet,
daß der Haltestempel (23) als Stanzer (22) zum Heraustrennen von Chips aus einer Trägefolie (21) ausgebildet ist.

13. Vorrichtung nach einem der Ansprüche 5 bis 12,
dadurch gekennzeichnet,
daß die Gehäuseseitenteile (42, 43) Bestandteile eines Drehtellers (50) sind, der in die Arbeitsstellungen Spritzen (51), Entnehmen (52) und Einlegen (53) verdrehbar ist.

14. Vorrichtung nach Anspruch 13,
dadurch gekennzeichnet,
daß die Arbeitsstellung Entnehmen (52) und Einlegen (53) zu einer Arbeitsstellung Entnehmen/Einlegen zusammengefaßt sind.

15. Vorrichtung nach den Ansprüchen 13 oder 14,
dadurch gekennzeichnet,
daß der Drehteller (50) eine Drehachse (II) aufweist, die senkrecht zur Zentralachse (I) der Spritzgießmaschine (10) angeordnet ist.

16. Vorrichtung nach Anspruch 15,
dadurch gekennzeichnet,
daß die Gehäuseseitenteile (42, 43) parallel zur Drehachse (II) bewegbar sind.

## Claims

1. A process for producing a decorated chip-card in an injection-moulding machine, in which
a) at least one film, which is coated on its broad side facing the cavity with a one-sided or two-sided decoration, is introduced into the opened cavity of the injection-moulding machine and positioned, wherein in the case of a film arranged on the chip-supply side of the cavity a window is cut for placing the chip before the introduction of the film into the cavity,
b) then the cavity is closed and the film or the films is or are fixed by clamping,
c) once the cavity has been closed a chip cut out of a film is fed thereto, held non-positively,
d) then a carrier substance for the chip-card is injected into the cavity,
e) once the injection operation has ended, the stalk is cut, the cavity is opened and the chip-card is removed.

2. A process according to Claim 1, characterised in that the chip held non-positively is introduced completely into the cavity and once the carrier substance has been injected is moved backwards thereby until 10 to 20% of its longitudinal extent projects over the chip surface.

3. A process according to Claims 1 to 2, characterised in that the feeding of the chip is terminated when the chip projects by between 80 and 90% into the cavity.

4. A process according to one of Claims 1 to 3, characterised in that the positioning of the films and the injection of the carrier substance of the chip-card are performed simultaneously but at different tool positions.

5. An injection-moulding machine with a mould, into the cavity of which carrier substances can be injected by an injection device for producing a decorated chip-card according to Claim 1, wherein
the mould has on the cover side a housing side part (42) and on the base side a housing side part (43),
the housing parts (42, 43) are movable perpendicular to the central plane (I) of the cavity of the injection-moulding machine,
film transport means (34, 35) can be arranged on at least one of the housing side parts (42, 43),
the housing side part (42) has a chip feed means (20) which has elements for non-positively holding the chip, and
a fixed ring (41) surrounding the cavity is located between the housing side parts (42, 43).

6. A device according to Claim 5, characterised in that the film transport means (34, 35) are located on the side of the housing side parts (42, 43) facing away from the cavity.

7. A device according to Claim 5, characterised in that corresponding sealing surfaces (45, 46) are provided on the housing side parts (42, 43) and on the ring (41).

8. A device according to Claims 6 or 7, characterised in that the sealing surfaces (45, 46) are constructed such that decorative films can be guided on the side of the housing side parts (42, 43) pointing towards the cavity and can be clamped on at least two sealing surfaces when the mould is closed.

9. A device according to Claim 6, characterised in that in addition to the film transport means (35) located on the cover side a film punch (36) for producing a chip window is provided on the housing side part (42).

10. A device according to Claim 5, characterised in that the chip feed means (20) is a laterally movable holding die (23).

11. A device according to Claim 10, characterised in that channels (25) for guiding pneumatic media are provided in the holding die (23).

12. A device according to Claims 10 or 11, characterised in that the holding die (23) is constructed as a punch (22) for separating chips out from a carrier film (21).

13. A device according to one of Claims 5 to 12, characterised in that the housing side parts (42, 43) are constituents of a rotary plate (50) which can be turned into the operating positions injection (51), removal (52) and insertion (53).

14. A device according to Claim 13, characterised in that the operating positions removal (52) and insertion (53) are combined to form a removal/insertion operating position.

15. A device according to Claims 13 or 14, characterised in that the rotary plate (50) has an axis of rotation (II) which is arranged perpendicular to the central axis (I) of the injection-moulding machine.

16. A device according to Claim 15, characterised in that the housing side parts (42, 43) are movable parallel to the axis of rotation (II).

## Revendications

1. Procédé pour fabriquer une carte à puce décorée dans une machine de moulage par injection, dans lequel :
a) dans la cavité ouverte de la machine de moulage par injection, on introduit et on positionne au moins un film qui est recouvert, sur sa face large en regard de la cavité, d'un décor à une ou deux faces, une fenêtre étant découpée, pour un film agencé sur le côté d'introduction de la puce de la cavité, avant l'introduction du film dans la cavité pour placer la puce,
b) ensuite on ferme la cavité et le ou les films sont fixés par serrage,
c) après la fermeture de la cavité, une puce découpée d'une feuille est amenée à celle-ci en étant maintenue par adhérence,
d) ensuite une masse de support pour la carte à puce est injectée dans la cavité,
e) après achèvement du processus d'injection, le culot d'injection est coupé, la cavité ouverte, et la carte à puce retirée.

2. Procédé selon la revendication 1,
caractérisé en ce que la puce maintenue par adhérence est introduite complètement dans la cavité et, après injection de la masse de support, est retirée de celle-ci jusqu'à ce que 10 à 20% de son étendue longitudinale dépassent la surface de la puce.

3. Procédé selon les revendications 1 ou 2,
caractérisé en ce que l'introduction de la puce est achevée quand la puce pénètre dans la cavité entre 80 et 90%.

4. Procédé selon une des revendications 1 à 3,
caractérisé en ce que le positionnement des films ainsi que l'injection de la masse de support de la carte à puce sont effectués simultanément mais en des positions différentes de l'outil.

5. Machine de moulage par injection comportant un outil dans la cavité duquel des masses de support pour fabriquer une carte à puce décorée selon la revendication 1 peuvent être injectées par un dispositif d'injection, l'outil présentant, du côté du couvercle, une partie latérale de boîtier (42) et, du côté du fond, une partie latérale de boîtier (43), les parties de boîtier (42,43) étant déplaçables perpendiculairement au plan central (I) de la cavité de la machine de moulage par injection, des dispositifs de transport de film (34,35) pouvant être agencés sur au moins une des parties latérales de boîtier (42,43), la partie latérale de boîtier (42) présentant une introduction de puce (20), possédant les éléments pour le maintien par adhérence de la puce, et une bague (41) stationnaire, entourant la cavité, étant agencée entre les parties latérales de boîtier (42,43).

6. Dispositif selon la revendication 5,
caractérisé en ce que les dispositifs de transport de film (34,35) sont agencés sur le côté, éloigné de la cavité, des parties latérales de boîtier (42,43).

7. Dispositif selon la revendication 5,
caractérisé en ce que des surfaces d'étanchéité (45,46) correspondantes sont prévues sur les parties latérales de boîtier (42,43) et sur la bague (41).

8. Dispositif selon les revendications 6 ou 7,
caractérisé en ce que les surfaces d'étanchéité (45,46) sont réalisées de sorte que des films décorés peuvent être amenés sur le côté, en regard de la cavité, des parties latérales de boîtier (42,43) et serrés, lorsque le moule est fermé, contre au moins deux surfaces d'étanchéité.

9. Dispositif selon la revendication 6,
caractérisé en ce que, de plus, vers le dispositif de transport de film (35) agencé du côté du couvercle, sur la partie latérale de boîtier (42), il est prévu un découpeur de film (36) pour réaliser une fenêtre de puce.

10. Dispositif selon la revendication 5,
caractérisé en ce que l'amenée de puce (20) est constituée par un poinçon de maintien (23) latéralement mobile.

11. Dispositif selon la revendication 10,
caractérisé en ce que, dans le poinçon de maintien (23), sont prévus des canaux (25) pour l'introduction de fluides pneumatiques.

12. Dispositif selon la revendication 10 ou 11,
caractérisé en ce que le poinçon de maintien (23) est réalisé comme découpeur (22) pour découper des puces d'une feuille de support (21).

13. Dispositif selon une des revendications 5 à 12,
caractérisé en ce que les parties latérales de boîtier (42,43) sont des constituants d'un plateau rotatif (50) qui peut être tourné dans les positions de travail injection (51), retrait (52) et introduction (53).

14. Dispositif selon la revendication 13,
caractérisé en ce que les positions de travail retrait (52) et introduction (53) sont réunies en une position de travail retrait/introduction.

15. Dispositif selon les revendications 13 ou 14,
caractérisé en ce que le plateau rotatif (50) présente un axe de rotation (II) qui est agencé perpendiculairement à l'axe central (I) de la machine de moulage par injection (10).

16. Dispositif selon la revendication 15,
caractérisé en ce que les parties latérales de boîtier (42,43) sont déplaçables parallèlement à l'axe de rotation (II).
